# EUROPEAN PATENT SPECIFICATION

(11) **EP 0 731 633 B1**
(45) Date of publication and mention of the grant of the patent: **12.06.2002**
(21) Application number: 94929083.7
(22) Date of filing: 30.09.1994
(51) Int. Cl.: A01M 23/20, A01M 23/24, A01M 23/34

(54) **A TRAP FOR TRAPPING AND POSSIBLY KILLING OF ANIMALS, ESPECIALLY SMALL ONES**
FALLE ZUM FANGEN UND GEGEBENENFALLS ABTÖTEN VON TIEREN, INSBESONDERE KLEINTIEREN
PIEGE PERMETTANT DE PIEGER ET EVENTUELLEMENT DE TUER DES ANIMAUX, NOTAMMENT DE PETITE TAILLE

(30) Priority: 01.10.1993 SE 9303200
(43) Date of publication of application: 18.09.1996
(73) Proprietor: Lundgren, Lars-Olof, S-571 41 Nässjö (SE)
(72) Inventor: Lundgren, Lars-Olof, S-571 41 Nässjö (SE)
(74) Representative: Lundquist, Arne
(86) International application number: PCT/SE94/00903
(87) International publication number: WO 95/09531

(56) References cited:
- DE-C- 126 038
- DE-C- 593 752
- US-A- 1 654 434
- US-A- 4 144 667
- US-A- 4 310 984
- US-A- 4 393 616
- US-A- 4 607 450

## Description

The present invention relates to a trap for catching and possibly killing of animals like minks etc, but also larger animals, of the art comprising a relatively elongated cage, preferably formed with a bottom, side walls and a roof made from bars, with a first gable wall with a preferably circular first opening intended to form an entrance for the animal, and a door provided, guided by guide elements, to be able to take a first position with the trap activated, in which said opening is open, and to take a second position, in which the trap is deactivated with said opening closed, further an activating means provided to act upon the the door to go from the first to the second position, comprising a first touching element in the cage, and a second gable wall, the door preferably being formed like a circular plate guided by guide elements fixed to the first gable wall, the first position of the door, with the cage activated, preferably being above its second position, with the cage deactivated.

Many traps, more or less of this art have been suggested. Brubaker, US 4,310,984 discloses a trap with a pair of transparent plastic end closures 22 and 23 fitted to a body 11. The closure 22 forms a slideable door in a front 12. The door is held up, opening the trap by a device in the form of a single wire 27, ending in a recess 26 in the front closure 22. One second end of the wire 27 carries a hook 31, on which an edible bait is disposed. When the bait is drawn, the closure 22 falls down.

Kaufman, US 4, 393, 616 discloses a trap, provided with one or two rods 46, 84 which protrude upwardly before an animal enters the trap, and are drawn down in in the trap when an animal has entered the trap.

None of these traps are reliable when telling at a large distance, if the trap has been deactivated or not. Thus, since a long time, there is demand for a trap of the art mentioned introductorily which is of simple and cheap construction but is yet reliable and efficient when used.

A trap according to the invention is characterized by the features given in the enclosed patent claims.

The invention shall be described more in detail in the following, reference being made to the enclosed schematical figures, of which:
figure 1 shows a view towards an elongated wall of a trap according to the invention,
figure 2 shows a view towardsthe first gable wall of the trap,
figure 3 shows a view towards the second gable wall of the trap,
figure 4 shows a view in the direction IV- IV in figure 1 with the trap activated,
figure 5 shows a view in the same direction as in figure 4, but with the trap deactivated,
figur 6 shows a view of a second opening, whilst
figure 7 shows, in perspective, a killing device, with the trap activated, and
figure 8 shows, in perspective, a killing device, with the trap desactivated.

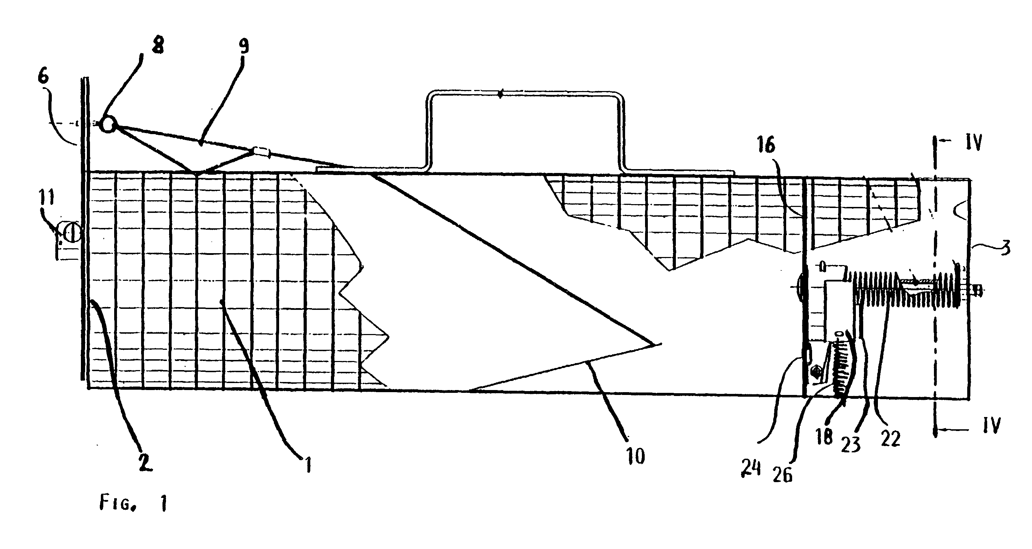

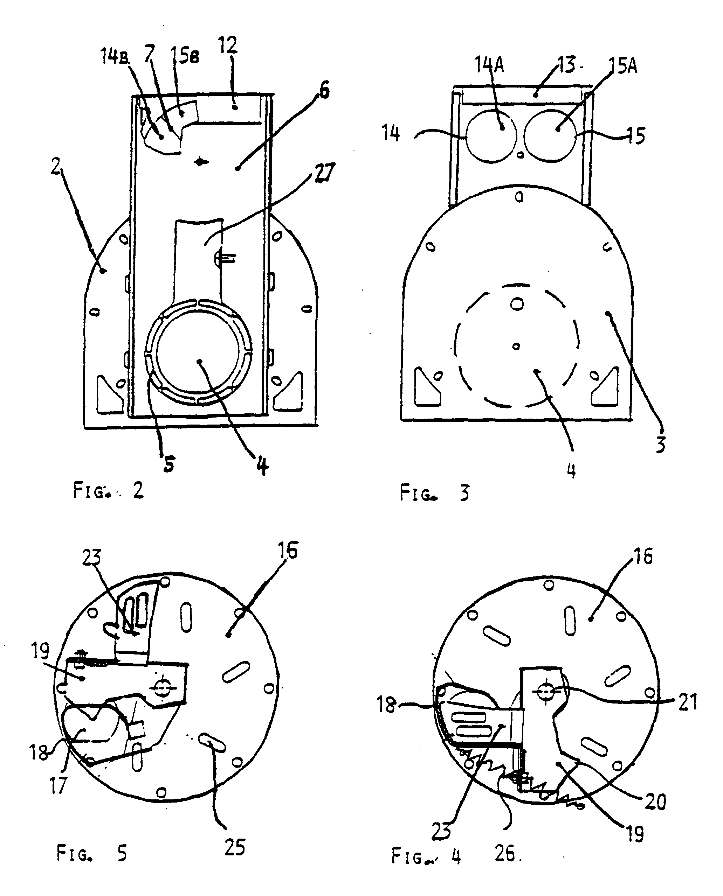

In figure 1 there is shown a relatively elongated cage 1, formed by bars. It is provided with a first gable wall 2 and a second gable wall 3, which are shown in figures 2 and 3.In the first gable wall 2 there is a circular opening 4. A number of arched recesses 5 are formed in the gable wall with the intention to admit, that the opening 4 is made larger according to the norms of the Naturvårdsverk. A doublewalled guide 6 is attached to the first gable wall, for guiding vertically of a door 7 in the form of a circular plate. A recess 27 is made in the guide 6 at its outside, so that the door may be lifted from its second to its first position. An activating means is provided with a cotter pin 8 placed in a corresponding hole in the doublewalled guide 6 and a hole in the door 7 in the activated position of the trap, that is to say when the door 7 is held in a first position. The activating means also comprises a thread 9 connected to a first touching means 10 in the form of a treading plate at the floor of the cage.Thus the activating means functions in such a way, that when the animal enters the cage and presses down the treading plate with its weight, the cotter pin 8 is drawn by the thread from its position, so that the door falls down by the gravity and takes its second, deactivated position. Per se the treading plate can be ommitted, and the thread can be fastened directly to the floor of the cage. As the door is circular there is no risk, that is shall bind to the guide 6.There is a lock 11 for locking of the door in its second position. As is obvious from figures 2 and 3 the trap is provided with two rectangular surface elements 12 and 13, suitably white, which make the finding of the trap in the dark easier. By providing such surface elements at both sides of the upper portion of the guide 6 the findning is made appreciably easier. At the side of the guide, that is turned to the cage, two holes 14 and 15 are provided in the upper portion, circular in the embodiment shown, but of course other forms may be considered.The side of the door, that is turned to these holes, is reflecting e g with red colour 14A and fluorescent colour 15A.With this embodiment it is seen by daytime, from the red fluorescent indication in the holes 14 and 15, that the trap is activated, and by night by seeing same by the red reflex, fluorescent, the indication showing that the trap is activated. The door is in this case at its other side provided with eg red colour 14B and fluorescent colour 15B. When the door falls down, these fields 14B and 15B getvisible in the direction towards the door 7.

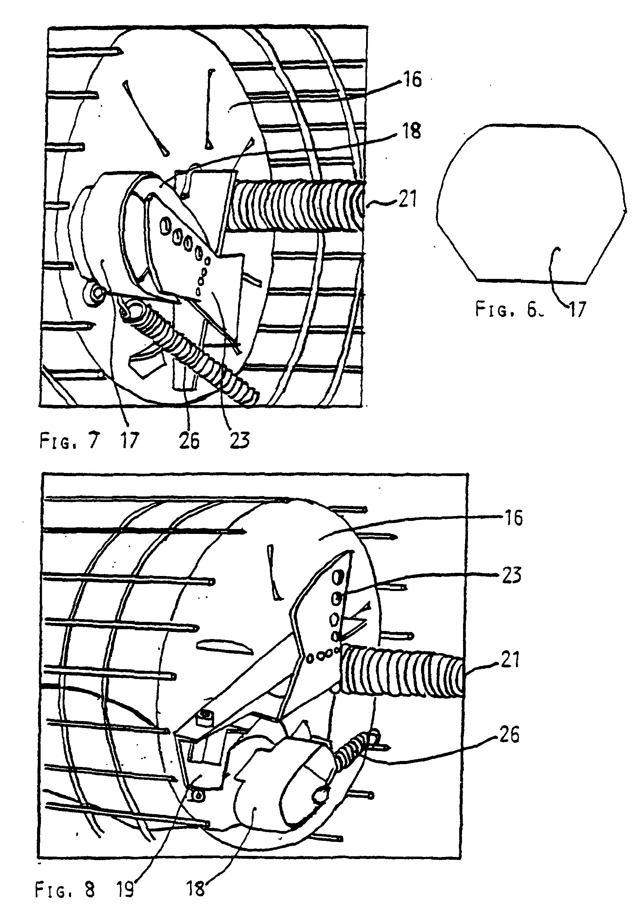

In figure 1 there is shown a third gable wall 16, provided within the cage in the vicinity of the second gable wall 3. This third gable wall 16 forms part of a killing device, and a second opening 17 is provided in the third gable wall, as is more obvious from figures 4 and 5.The killing device is shown in activated position in figures 1,4 and 7, and in deactivated position in figures 5 and 8. The second opening 17 has the right size to comprise a the head of a catched animal. In figure 6 a preferred embodiment of this opening is shown, with side edges, that converge downwardly, so that the jaw of an animal fits, getting fixed in the opening. A fixing clamp 18 is provided, fixed to the third gable, being able to take an activated first position as in figures 1,4 and 7 and a deactivated position as in figures 5 and 8.The activated position means, that an animal can put in its head through the opening and into the fixing clamp in its activated position, and that its deactivated position means, that the fixing clamp aided by a spring 26 attached to the bottom of the cage, presses the head of the animal against the lower portion of the second opening 17.A hit means in the form of hit arm 19 with a preferably conical point 20 is journalled around a horizontal shaft 21, which is mounted in bearings in the second and third gable walls.The hit arm can be pretensioned to an activated position against a screw spring 22. The fixing clamp 18 and the hit arm 19 are kept in their activated positions by fixing means, in the form of a plate tongue 24, inserted into one of a number of oval holes 25 in the third gable wall 16. This plate tongue is connected to an activating arm 23, which in activated position covers the second opening 17, being able to be acted upon by a relatively small force by a portion of the head of the animal like its lower jaw. The function is thus, that the animal by touching the activating arm 23 firstly brings the fixing clamp to lock its head against the lower portion of the opening 17, whereupon the hit arm hits killing against the head of the animal. By a suitable form of the opening 17, as is shown in figure 6, the head of the animal will be fixed in such a position, that the hit arm with its conical portion will hit in the middle of the head of the animal, whereby the killing will be efficient considering the form of the cranium of the animal, in many cases with a ridge in direct connection to the brain. Per se it is of course perfectly possible to form the killing device so that the hit arm will hit from another direction than that shown in the figures, that is to say optionally from above, from below or from a side, but the embodiment shown has proven to be suitable and efficient. The spring 26 can also be arranged to give the hit arm a certain starting speed.

## Claims

1. A trap for catching and possibly killing of animals like minks etc, but also larger animals, of the art comprising a relatively elongated cage (1), preferably formed with a bottom, side walls and a roof made from bars, with a first gable wall (2) with a preferably circular first opening (4) intended to form an entrance for the animal, and a door (7) provided, guided by guide elements (6), to be able to take a first position with the trap activated, in which said opening (4) is open, and to take a second position, in which the trap is deactivated with said opening (4) closed, further an activating means (8,9,10) provided to act upon the the door (7) to go from the first to the second position, comprising a first touching element (10) in the cage, and a second gable wall (3), the door (7) preferably being formed like a circular plate (7) guided by guide elements (6) fixed to the first gable wall (2), the first position of the door (7), with the cage activated, preferably being above its second position, with the cage deactivated,
**characterized in that**
the trap is provided with indicating means, optically readable in a relatively large distance, for indicating the activated respective deactivated position of the trap, said indicating means consisting of at least one surface element (14A,15A) which is provided to take a first position, visible outwardly through a hole (14,15) in the guide element (G) from one first direction in relationship to the trap, respective one second position, not visible through said hole (14,15) from said first direction, when the door (7) takes its first or second position.

2. A trap according to claim 1,
**characterized in that**
the indicating means comprise at least one further surface element (14B,15B) which is provided to take a position, visible outwardly from said first gable wall (2) from one second direction, opposite to said first direction, respective a position not visible, when the door (7) takes its first or second position.

3. A trap according to claim 1 or 2,
**characterized in that**
it comprises at least one third surface element (12,13) with such a form, that it can be optically easily distinguished from said first (14A,15A) resp second (14B,15B) surface elements, for making the determination of the position of the trap in the dark easier.

4. A trap according to any of claims 1 to 3,
**characterized in that**
at least one of said surface elements (14A, 15A, 15B, 15B, 12, 13) is reflecting and/or fluorescent.

5. A trap according to any of the preceeding claims, at which the activating means consists of a first touching element in the form of a treading plate (10), journalled at the bottom of the cage,
**characterized in that**
the treading plate (10) is connected, via a thread (9) to a cotter pin (8) keeping the door (7) in its first position, the activating pressure at the treading plate (10) being adjustable by setting the angle between the legs of the cotter pin (8).

6. A trap according to any of the preceeding claims,
**characterized in that** it is provided with a killing device in the portion of the cage, that is
opposite to said opening (4),
**characterized in that**
the killing device comprises a third, inner gable wall (16), in which there is provided a second opening (17), with a dimension, adapted to comprise the head of the animal with a certain margin, further a fixing clamp (18) provided to be able to take a first activated position with an active portion at such a distance from the limit of the opening (17), that there room for the head of the animal within the fixing clamp (18), and a second deactivated position with said active portion acting with a certain force, i e provided by a spring (26) so that a head of an animal can be fixed against the limit of the opening (17), and a hit means (19) provided to be able to take an activated first position pretensioned against a power means, like a screw spring (22), and a deactivated second position within the level area of the second opening (17), so that the hit means (19) can hit the head of the animal, killing, when it has been fixed by the fixing clamp (18), the fixing clamp and the hit means (19) beeing provided to be released from their first positions, in which they have been fixed by fixing means (24,25), by a second touching means (23) located within the area for the second opening (17) able to be acted upon with a relatively small power by one portion of the head of the animal like its lower jaw.

7. A trap according to claim 6,
**characterized in that**
said opening (17) is formed with side edges, that converge downwardly.

## Patentansprüche

1. Falle zum Fangen und gegebenenfalls Töten von Tieren wie Nerzen usw., jedoch auch größeren Tieren, mit einem relativ langen Käfig (1), der vorzugsweise mit einem Boden, Seitenwänden und einem Dach aus Stangen gebildet ist, mit einer ersten Giebelwand (2) mit einer vorzugsweise runden ersten Öffnung (4), die einen Eingang für das Tier bildet, sowie einer mit Führungselementen (6) geführten Tür (7), die eine erste Position bei aktivierter Falle, in der die Öffnung (4) offen ist, sowie eine zweite Position, in der die Falle deaktiviert und die Öffnung (4) geschlossen ist, einnehmen kann, ferner mit einem Aktivierungsmittel (8, 9, 10), das auf die Tür (7) einwirken kann, so dass sich diese von der ersten in die zweite Position bewegt, mit einem ersten Berührungselement (10) in dem Käfig, sowie mit einer zweiten Giebelwand (3), wobei die Tür (7) vorzugsweise wie eine runde Platte (7) gebildet ist, die durch an der ersten Giebelwand (2) befestigte Führungselemente (6) geführt wird, und wobei die erste Position der Tür (7) bei aktiviertem Käfig vorzugsweise über ihrer zweiten Position bei deaktiviertem Käfig liegt,
**dadurch gekennzeichnet, dass**
die Falle mit Anzeigemitteln, die in einer großen Entfernung optisch erkennbar sind, zum Anzeigen der aktivierten bzw. deaktivierten Position der Falle versehen ist, wobei die Anzeigemittel aus mindestens einem Flächenelement (14A, 15A) gebildet sind, das eine erste Position, in der es durch ein Loch (14, 15) in dem Führungselement (6) aus einer ersten Richtung relativ zu der Falle von außen sichtbar ist, bzw. eine zweite Position einnehmen kann, in der es aus der ersten Richtung nicht durch das Loch (14, 15) sichtbar ist, wenn die Tür (7) ihre erste oder zweite Position einnimmt.

2. Falle nach Anspruch 1,
**dadurch gekennzeichnet, dass** die Anzeigemittel mindestens ein weiteres Flächenelement (14B, 15B) aufweisen, das eine Position, die außerhalb von der ersten Giebelwand (2) aus einer zweiten Richtung gegenüber der ersten Richtung sichtbar ist, bzw. eine Position einnehmen kann, die nicht sichtbar ist, wenn die Tür (7) ihre erste oder zweite Position einnimmt.

3. Falle nach Anspruch 1 oder 2,
**dadurch gekennzeichnet, dass** sie mindestens ein drittes Flächenelement (12, 13) mit einer solchen Form aufweist, dass es optisch in einfacher Weise von den ersten (14A, 15A) bzw. zweiten (14B, 15B) Flächenelementen unterscheidbar ist, um eine Bestimmung der Position der Falle im Dunkeln zu erleichtern.

4. Falle nach einem der Ansprüche 1 bis 3,
**dadurch gekennzeichnet, dass** mindestens eines der Flächenelemente (14A, 15A, 14B, 15B, 12, 13) reflektierend und/oder fluoreszierend ist.

5. Falle nach einem der vorhergehenden Ansprüche, bei der die Aktivierungsmittel ein erstes Berührungselement in Form einer Tretplatte (10) umfassen, die am Boden des Käfigs gelagert ist, **dadurch gekennzeichnet, dass**
die Tretplatte (10) über einen Faden (9) mit einem Splint (8) verbunden ist, der die Tür (7) in ihrer ersten Position hält, wobei der Aktivierungsdruck an der Tretplatte (10) durch Verändern des Winkels zwischen den Schenkeln des Splints (8) einstellbar ist.

6. Falle nach einem der vorhergehenden Ansprüche,
**dadurch gekennzeichnet, dass** sie mit einer Tötungseinrichtung in dem Teil des Käfigs, der der Öffnung (4) gegenüberliegt, versehen ist, mit einer dritten inneren Giebelwand (16), in der sich eine zweite, so bemessene Öffnung (17) befindet, dass sie den Kopf eines Tieres mit einem bestimmten Rand aufnehmen kann, ferner mit einer fixierenden Klemmeinrichtung (8), die eine erste aktivierte Position mit einem aktiven Teil in einem solchen Abstand von dem Rand der Öffnung (17), dass Raum für den Kopf eines Tieres in der fixierenden Klemmeinrichtung (18) vorhanden ist, und eine zweite deaktivierte Position einnehmen kann, in der der aktive Teil mit einer bestimmten Kraft, die zum Beispiel durch eine Feder (26) erzeugt wird, wirkt, so dass der Kopf eines Tieres gegen den Rand der Öffnung (17) fixiert wird, sowie mit einer Schlageinrichtung (19), die eine aktivierte erste, gegen eine Krafteinrichtung wie eine Schraubenfeder (22) vorgespannte Position und eine deaktivierte zweite Position innerhalb des Höhenbereiches der zweiten Öffnung (17) einnehmen kann, so dass die Schlageinrichtung (19) gegen den Kopf eines Tieres schlagen und dieses töten kann, wenn es durch die fixierende Klemmeinrichtung (18) fixiert worden ist, wobei die fixierende Klemmeinrichtung und die Schlageinrichtung (19) aus ihren ersten Positionen, in denen sie durch die fixierenden Einrichtungen (24, 25) fixiert sind, durch eine zweite Berührungseinrichtung (23), die in dem Bereich der zweiten Öffnung (17) liegt, gelöst werden können, auf die eine relativ kleine, mit einem Teil des Kopfes eines Tieres wie seiner unteren Backe ausgeübte Kraft einwirken kann.

7. Falle nach Anspruch 6, **dadurch gekennzeichnet, dass** die Öffnung (17) mit Seitenkanten ausgebildet ist, die in einer Richtung nach unten zusammenlaufen.

## Revendications

1. Piège pour attraper et éventuellement abattre des anitnaux tels que des visons ou autres, mais également des animaux de plus grande taille, du type comprenant une cage (1) relativement allongée, de préférence formée d'un fond, de parois latérales et d'un toit, constitués de barreaux, ainsi que d'une première paroi à pignon (2) présentant une première ouveilure (4), de préférence circulaire, destinée à former une entrée pour l'animal, et une porte (7) conçue, en étant guidée par des éléments de guidage (6), pour être apte à prendre, alors que le piège est amorcé, une première position, dans laquelle ladite ouverture (4) est ouverte, et à prendre une deuxième position, dans laquelle le piège est désamorcé et ladite ouverture (4) fermée, un moyen d'actionnement (8, 9, 10), prévu par ailleurs pour agir sur la porte (7) afin de la faire passer de la première à la deuxième position, comprenant un premier élément de commande par contact (10) à l'intérieur de la cage, et d'une deuxième paroi à pignon (3), la porte (7) étant, de préférence, réalisée sous la forme d'une plaque circulaire (7) guidée par les éléments de guidage (6), lesquels sont fixés à la première paroi à pignon (2), la première position de la porte (7), occupée lorsque la cage est amorcée, étant de préférence au-dessus de sa deuxième position, occupée lorsque la cage est désamorcée,
**caractérisé en ce que**
le piège est pourvu de moyens d'indication, pouvant être lus visuellement à une distance relativement grande, pour indiquer l'état amorcé, respectivement désamorcé, du piège, lesdits moyens d'indication consistant en au moins un élément de surface (14A, 15A) qui est ménagé de façon à prendre une première position, visible de l'extérieur à travers un trou (14, 15) de l'élément de guidage (6) dans une première direction par rapport au piège, respectivement une deuxième position, qui n'est pas visible à travers ledit trou (14, 15) dans ladite première direction, lorsque la porte (7) prend sa première ou sa deuxième position.

2. Piège selon la revendication 1,
**caractérisé en ce que**
les moyens d'indication comprennent au moins un élément de surface supplémentaire (14B, 15B) qui est ménagé de façon à prendre une position, visible de l'extérieur depuis ladite première paroi à pignon (2) dans une deuxième direction, opposée à ladite première direction, respectivement une position qui n'est pas visible, lorsque la porte (7) prend sa première ou sa seconde position.

3. Piège selon la revendication 1 ou 2,
**caractérisé en ce que**
il comprend au moins un troisième élément de surface (12, 13) présentant une forme telle, qu'il peut être facilement distingué visuellement desdits premier (14A, 15A), resp. deuxième (14B, 15B) éléments de surface, pour rendre plus aisée la détermination de l'état du piège dans l'obscurité.

4. Piège selon l'une quelconque des revendications 1 à 3,
**caractérisé en ce que**
au moins l'un desdits éléments de surface (14A, 15A, 14B, 15B, 12, 13) est réfléchissant et/ou fluorescent.

5. Piège selon l'une quelconque des revendications précédentes, dans lequel le moyen d'actionnement comporte un premier élément de commande par contact sous la forme d'une plaque de commande au pied (10), articulée sur le fond de la cage,
**caractérisé en ce que**
la plaque de commande au pied (10) est reliée, par l'intermédiaire d'un fil (9), à une goupille fendue (8) maintenant la porte (7) dans sa première position, la pression d'actionnement sur la plaque de commande au pied (10) étant réglable par ajustement de l'angle entre les branches de la goupille fendue (8).

6. Piège selon l'une quelconque des revendications précédentes,
**caractérisé en ce qu'**il est équipé d'un dispositif d'abattage dans la partie de la cage, qui est opposée à ladite ouverture (4),
et **en ce que**
le dispositif d'abattage comprend une troisième paroi à pignon (16), intérieure, dans laquelle est ménagée une deuxième ouverture (17) d'une dimension adaptée pour embrasser la tête de l'animal avec un certain espacement latéral, une pince de blocage (18) conçu de façon à être apte à prendre une première position amorcée, dans laquelle elle a une partie active située à une distance telle du bord délimitant l'ouverture (17), qu'il y a place pour la tête de l'animal à l'intérieur de la pince de blocage (18), et une deuxième position désamorcée, dans laquelle ladite partie active agit avec une certaine force, fournie par un ressort (26), afin qu'une tête d'un animal puisse être bloquée contre le bord délimitant l'ouverture (17), et un moyen de frappe (19) conçu de façon à être apte à prendre une première position amorcée, étant alors pré-armé à l'encontre d'un moyen de propulsion, tel qu'un ressort hélicoïdal (22), et une deuxième position désamorcée dans la zone située au niveau de la deuxième ouverture (17), afin que le moyen de frappe (19) puisse frapper la tête de l'animal, en le tuant, une fois qu'elle a été bloquée par la pince de blocage (18), la pince de blocage et le moyen de frappe (19) étant conçus pour, quand ils sont dans leurs premières positions dans lesquelles ils ont été immobilisés par des moyens d'immobilisation (24, 25), être libérés par un deuxième moyen de commande par contact (23) positionné dans la zone de la deuxième ouverture (17), sur lequel est susceptible d'agir, avec une énergie relativement faible, une partie de la tête de l'animal, telle que sa mâchoire inférieure.

7. Piège selon la revendication 6,
**caractérisé en ce que**
ladite ouverture (17) est dotée de bords latéraux qui sont convergents vers le bas.
